# EUROPÄISCHE PATENTSCHRIFT

(11) **EP 2 796 761 B1**
(45) Veröffentlichungstag und Bekanntmachung des Hinweises auf die Patenterteilung: **24.03.2021**
(21) Anmeldenummer: 13165139.0
(22) Anmeldetag: 24.04.2013
(51) Int. Cl.: F16L 57/00, B67D 7/42, F16L 57/06, F16L 33/035

(54) **Ringförmig verschließbares Band und dessen Verwendung**
Annular lockable band and its use
Bande pouvant être fermée en forme d'anneau et son utilisation

(43) Veröffentlichungstag der Anmeldung: 29.10.2014
(73) Patentinhaber: ELAFLEX HIBY GmbH & Co. KG, 22525 Hamburg (DE)
(72) Erfinder: Meyer, Heinz-Ulrich, 22589 Hamburg (DE)
(74) Vertreter: Glawe, Delfs, Moll

(56) Entgegenhaltungen:
- DE-A1-102004 045 993
- DE-U1-202008 008 547
- DE-U1-202011 001 142
- FR-A1- 2 664 347
- US-A- 2 784 129

## Beschreibung

Die Erfindung betrifft ein ringförmig verschließbares Band zum Umfassen eines oder mehrerer Gegenstände gemäß dem Oberbegriff des Anspruchs 1 sowie die Verwendung eines entsprechenden Bandes als Schutzüberzug für eine Komponente einer Zapfvorrichtung.

Ringförmig verschließbare Bänder zum Umfassen von Gegenständen sind aus offenkundiger Vorbenutzung bekannt. Beispielhaft genannt seien Kabelbinder, die dazu verwendet werden, mehrere Kabel zu umfassen und gegebenenfalls zusammenzuhalten. Ein Kabelbinder besteht in der Regel aus einem Band mit einem Verschlusskopf an einem Ende und mehreren, über das Band verteilten Rastelementen. Um den Kabelbinder zu verschließen, wird ein Ende des Bandes durch den Verschlusskopf geführt und der Verschlusskopf mit den Rastelementen verrastet. Nachteilig an solchen Kabelbindern ist, dass der Verschlusskopf, der ein Ende des Bandes aufnehmen soll, vergleichsweise voluminös ist. Selbst wenn das überstehende Ende des Bandes nach dem Verrasten abgeschnitten wird, steht zumindest der Verschlusskopf nach Außen über. Dies beeinträchtigt die Handhabbarkeit, da der Kabelbinder mit dem vorstehenden Gehäuse an anderen Gegenständen hängenbleiben kann. Gegebenenfalls kann dies dazu führen, dass der Kabelbinder von den umfassten Gegenständen wieder abgestreift bzw. abgerissen werden kann. Weiterhin sind ringförmig verschließbare Bänder auch aus der DE 20 2008 008 547 U1, der DE 20 2011 001 142 U1, der DE 10 2004 045 993 A1 und aus der FR 2 664 347 bekannt. Ein Band nach dem Oberbegriff des Anspruchs 1 ist aus der US 2 784 129 bekannt.

Der Erfindung liegt die Aufgabe zu Grunde, ein ringförmig verschließbares Band der eingangs genannten Art bereitzustellen, das sich durch gute Handhabbarkeit auszeichnet.

Gelöst wird die Aufgabe durch ein Band mit den Merkmalen des unabhängigen Anspruchs 1. Vorteilhafte Weiterbildungen der Erfindung sind in den abhängigen Ansprüchen definiert.

Zunächst seien einige im Rahmen der Erfindung verwendete Begriffe erläutert.

Ein erfindungsgemäßes Band ist ringförmig verschließbar, d.h. es ist von einem offenen in einen geschlossenen Zustand überführbar und weist im geschlossenen Zustand eine ringförmige Geometrie auf. Bei der Ringform kann es sich bevorzugt um eine Kreisform handeln. Andere ringförmige Geometrien, z. B. eine Ellipse, liegen aber ebenfalls im Rahmen der Erfindung. Ein erfindungsgemäßes Band dient zum Umfassen eines oder mehrerer Gegenstände. Es hat eine Innenseite, die dazu vorgesehen ist, dem oder den zu umfassenden Gegenständen zugewandt zu sein. Die Innenseite ist somit die im geschlossenen Zustand des Bandes radial nach innen weisende Seite (bezogen auf die Ringgeometrie). Der Innenseite gegenüber liegt die Außenseite des Bandes, welche im geschlossenen Zustand radial nach außen weist.

Ein erfindungsgemäßes Band umfasst zwei Endbereiche, die zum Verschließen des Bandes miteinander in Überlappung gebracht werden können. Die Endbereiche weisen korrespondierende Schließelemente auf, die dazu ausgebildet sind, derart miteinander in Eingriff gebracht zu werden, dass das Band im geschlossenen Zustand eine im Wesentlichen glatte Außenumfangsfläche aufweist.

Die Erfindung hat erkannt, dass korrespondierende Schließelemente, die dazu ausgebildet sind, derart miteinander in Eingriff gebracht zu werden, dass das Band im geschlossenen Zustand eine im Wesentlichen glatte Außenumfangfläche aufweist, zu einer verbesserten Handhabbarkeit des Bandes führen. Im Rahmen der Erfindung bezeichnet eine im Wesentlichen glatte Außenumfangsfläche, eine Außenumfangsfläche, welche im Wesentlichen frei ist von Vorsprüngen, Stufen und ähnlichen Strukturelementen, die dazu führen können, dass das geschlossene Band an anderen Gegenständen hängenbleibt. Das erfindungsgemäße Band kann im geschlossenen Zustand Fugen in der Außenumfangsfläche aufweisen, beispielsweise in dem Bereich, in dem die Schließelemente ineinandergreifen. Die Vertiefungen der Fugen bieten jedoch keine oder nur eine sehr geringe Angriffsfläche, die in der Regel nicht dazu führt, dass das geschlossene Band an anderen Gegenständen hängenbleibt.

Die Abmessungen der Schließelemente können aufeinander abgestimmt sein, damit das Band im geschlossenen Zustand eine im Wesentlichen glatte Außenumfangfläche aufweist. Vorzugsweise können die Schließelemente formschlüssig miteinander in Eingriff gebracht werden.

Erfindungsgemäß sind die Schließelemente dazu ausgebildet, eine Relativbewegung der Endbereiche in Umfangsrichtung und Axialrichtung, zu verhindern, wenn die Schließelemente miteinander in Eingriff stehen. Der Begriff Relativbewegung bezeichnet eine Bewegung eines Endbereiches relativ zum anderen Endbereich. Die Begriffe Umfangsrichtung und Axialrichtung beziehen sich im Rahmen der Erfindung auf den geschlossenen Zustand des Bandes, wobei der Begriff Axialrichtung die Richtung parallel zur Außenumfangsfläche des Bandes und quer zur Umfangsrichtung bezeichnet.

Bei einer bevorzugten Ausführungsform der Erfindung unterscheidet sich die Richtung, in der die Schließelemente miteinander in Eingriff gebracht werden können, von der Hauptbelastungsrichtung der Endbereiche. Dies bewirkt, dass der oder die umfassten Gegenstände besser zusammengehalten werden können. Der Begriff Hauptbelastungsrichtung der Endbereiche bezeichnet die Richtung der im normalen Gebrauch bei geschlossenem Zustand des Bandes auf die Endbereiche wirkenden Nettobelastung. Die Nettobelastung ergibt sich aus der Summe aller im normalen Gebrauch des Bandes im geschlossenen Zustand auf die Endbereiche wirkenden Kräfte, wobei die Schwerkraft unberücksichtigt bleibt. Die Hauptbelastungsrichtung kann sich für beide Endbereiche unterscheiden. Die Richtung, in der die Schließelemente miteinander in Eingriff gebracht werden können, unterscheidet sich dann bevorzugt von der Hauptbelastungsrichtung eines jeden der beiden Endbereiche.

Vorzugsweise unterscheidet sich die Richtung, in der die Schließelemente miteinander in Eingriff gebracht werden können von der Umfangsrichtung. Es ist im Rahmen der Erfindung besonders bevorzugt, wenn die Schließelemente in Radialrichtung miteinander in Eingriff gebracht werden können. Der Begriff Radialrichtung bezieht sich im Rahmen der Erfindung auf den geschlossenen Zustand des Bandes.

Vorteilhafterweise kann das erfindungsgemäße Band einfach geschlossen und wieder geöffnet werden. Ein solches Band ist einfach austauschbar und kann wiederverwendet werden. Bei einer bevorzugten Ausführungsform der Erfindung ist die zum Verschließen des Bandes erforderliche Kraft geringer, als die zum Öffnen des Bandes erforderliche Kraft.

Vorteilhafterweise umfasst zumindest eines der Schließelemente wenigstens ein Rastelement, wobei das Rastelement vorzugsweise an der Innenseite des Bandes angeordnet ist.

Erfindungsgemäß umfassen die Schließelemente jeweils eine Mehrzahl von in Axialrichtung verlaufenden und voneinander beabstandeten Vorsprüngen und Aussparungen, die so ausgebildet sind, das die Vorsprünge eines Schließelements mit den Aussparungen des anderen Schließelements in Eingriff gebracht werden können. Die Aussparungen und Vorsprünge können in ihren Dimensionen so aufeinander abgestimmt sein, dass das Band im geschlossenen Zustand eine im Wesentlichen glatte Außenumfangsfläche aufweist. Vorteilhafterweise sind die Vorsprünge an der Außenseite eines Endbereichs und an der Innenseite des anderen Endbereichs angeordnet.

Gemäß einer Ausführungsform der vorliegenden Offenbarung umfasst wenigstens ein Endbereich des Bandes mindestens zwei, in Umfangsrichtung voneinander beabstandete Schließelemente, die jeweils mit einem korrespondierenden Schließelement des anderen Endbereichs zum Verschließen des Bandes in Eingriff gebracht werden können, so dass wahlweise mindestens zwei geschlossenen Zustände mit unterschiedlichen Innenradien des Bandes erhalten werden können. Bei dieser Ausführungsform können verschiedene geschlossene Zustände des Bandes mit unterschiedlichen Innenradien erhalten werden. Das macht es möglich, verschiedene Gegenstände mit unterschiedlichen, an die jeweiligen Innenradien des Bandes angepassten Außenradien formschlüssig zu umschließen. Zwischen den mindestens zwei, in Umfangrichtung voneinander beabstandeten Schließelementen kann wenigstens eine Sollbruchstelle vorgesehen sein, die es erlaubt, den überstehenden Teil des Endbereiches abzubrechen, so dass eine im wesentlichen glatte Außenumfangfläche erhalten wird.

Ein erfindungsgemäßes Band kann einen Verdrehschutz aufweisen. Vorzugsweise ist der Verdrehschutz so angeordnet, dass er im geschlossenen Zustand des Bandes mindestens um 90° von den Endbereichen des Bandes beabstandet ist. Besonders bevorzugt ist der Verdrehschutz so angeordnet, dass er im geschlossenen Zustand des Bandes den Endbereichen im Wesentlichen gegenüber liegt. Ein vorteilhafter Verdrehschutz weist mindestens einen, vorzugsweise zwei, an der Innenseite des Bandes angeordnete Vorsprünge auf, die mit Strukturelementen des zu umfassenden Gegenstands zusammenwirken können, um ein Verdrehen des Bandes zu verhindern. Bei den Strukturelementen kann es sich beispielsweise um Aussparungen handeln. Es ist ebenfalls möglich, dass der Verdrehschutz einen, vorzugsweise zwei, an der Innenseite des Bandes angeordnete Aussparungen aufweist, die mit Strukturelementen des zu umfassenden Gegenstands zusammenwirken können, um ein Verdrehen des Bandes zu verhindern. In diesem Fall können die Strukturelemente des zu umfassenden Gegenstands Vorsprünge umfassen.

Vorteilhafterweise ist das Band aus einem elastischen Material gefertigt. Ein bevorzugtes Material ist Kunststoff.

Es kann vorgesehen sein, dass die Ausdehnung des Bandes in Axialrichtung größer als der Innendurchmesser des Bandes im geschlossenen Zustand ist. Alternativ kann die Ausdehnung des Bandes in Axialrichtung auch kleiner sein als der Innendurchmesser des Bandes im geschlossenen Zustand.

Die Erfindung hat außerdem erkannt, dass ein erfindungsgemäßes Band als Schutzüberzug für eine Komponente einer Zapfvorrichtung verwendet werden kann. Bevorzugt kann es sich bei der Komponente um eine Abreißkupplung eines Zapfventils handeln. Solche Abreißkupplungen werden in der Regel durch Kunststofftüllen geschützt, bei denen es sich im Grunde um röhrenförmige Werkstücke handelt, die über die Abreißkupplung gestülpt werden. Die Tüllen können farblich codiert sein, beispielsweise, um so den durch das Zapfventil abzugebenden Kraftstoff zu kennzeichnen. Wenn eine solche Tülle ausgetauscht werde muss, sei es z. B. weil sie beschädigt ist, oder weil eine andersfarbige Tülle installiert werden soll, muss zuerst die Verbindung zwischen dem Zapfventil und dem Schlauch getrennt werden, damit die Tülle abgestreift werden kann. Wegen des damit verbundenen Lufteintrags in das Zapfsystem, zieht ein solches Vorgehen in der Regel eine erneute Eichung der Zapfvorrichtung nach sich. Dies ist aufwändig und kostenträchtig.

Die Erfindung hat erkannt, dass ein erfindungsgemäßes Band als Schutzüberzug für eine entsprechende Abreißkupplung verwendet werden kann. Das Band kann vergleichsweise einfach ausgetauscht werden, ohne dass die Verbindung zwischen Zapfventil und Schlauch getrennt werden muss. Eine erneute Eichung ist folglich nicht notwendig. Das erfindungsgemäße Band fungiert somit als austauschbare Tülle.

Grundsätzlich können alle bereits oben beschriebenen Ausführungsformen des erfindungsgemäßen Bandes als Schutzüberzug verwendet werden. Auf die obigen Ausführungen wird im Rahmen der Verwendung ausdrücklich Bezug genommen.

Gemäß der erfindungsgemäßen Verwendung ist eine Ausführungsform des Bandes vorgesehen, bei der die Schließelemente jeweils eine Mehrzahl von in Axialrichtung verlaufenden und voneinander beabstandeten Vorsprüngen und Aussparungen umfassen, die so ausgebildet sind, das die Vorsprünge eines Schließelements mit den Aussparungen des anderen Schließelements in Eingriff gebracht werden können. Die Aussparungen und Vorsprünge sind in ihren Dimensionen so aufeinander abgestimmt, dass das Band im geschlossenen Zustand eine im Wesentlichen glatte Außenumfangsfläche aufweist. Vorteilhafterweise sind die Vorsprünge an der Außenseite eines Endbereichs und an der Innenseite des anderen Endbereichs angeordnet. Es kann vorgesehen sein, dass die Ausdehnung des Bandes in Axialrichtung größer als der Innendurchmesser des Bandes im geschlossenen Zustand ist. Vorteilhafterweise ist das Band aus einem elastischen Material, vorzugsweise aus Kunststoff, gefertigt. Das erfindungsgemäß verwendete Band kann eine Farbcodierung aufweisen. Bevorzugt sind die Abmessungen des Bandes auf die Abmessungen der Komponente des Zapfventils abgestimmt. Besonders bevorzugt ist das erfindungsgemäß verwendete Band so bemessen, dass es die Komponente im geschlossenen Zustand formschlüssig umfasst. Eine bevorzugte Komponente im Rahmen der Erfindung ist eine Abreißkupplung eines Zapfventils. Alternativ ermöglicht es die Erfindung auch, eine aus mehreren zusammenfügbaren Elementen bestehende Tülle bzw. einen entsprechenden Schutzüberzug mittels einem oder mehrerer erfindungsgemäßer Bänder an einer Komponente einer Zapfvorrichtung zu befestigen. Die Tülle kann beispielsweise aus zwei Halbschalen bestehen, die durch zwei erfindungsgemäße Bänder zusammengehalten werden und mittels dieser Bänder an einer Komponente einer Zapfvorrichtung, z. B. einer Abreißkupplung, befestigt sind. Eine solche Tülle kann ebenfalls einfach ausgetauscht werden, indem die Bänder geöffnet werden und die beiden Halbschalen der Tülle abgenommen werden. Eine Trennung der Verbindung zwischen Zapfventil und Schlauch muss hierzu nicht erfolgen. Die Notwendigkeit für eine Nacheichung der Zapfvorrichtung entfällt. Die Verwendung eines oder mehrerer erfindungsgemäßer Bänder zur Befestigung einer aus mehreren zusammenfügbaren Elementen bestehenden Tülle an einer Komponente einer Zapfvorrichtung, liegt somit ebenfalls im Rahmen der Erfindung. Eine bevorzugte Komponente ist eine Abreißkupplung eines Zapfventils. Grundsätzlich können alle bereits oben beschriebenen Ausführungsformen des erfindungsgemäßen Bandes zur Befestigung der Tülle verwendet werden. Auf die obigen Ausführungen wird im Rahmen der Verwendung ausdrücklich Bezug genommen.

Nachfolgend werden vorteilhafte Ausführungsformen der Erfindung anhand der Zeichnungen beispielhaft beschrieben. Es zeigen:
Fig. 1: Eine erste Ausführungsform eines nicht erfindungsgemäßen Bandes mit einem Verdrehschutz.
Fig. 2: Eine zweite Ausführungsform eines erfindungsgemäßen Bandes, in drei Ansichten, nämlich einen Querschnitt (a), eine schräge Draufsicht auf das Band im geöffneten Zustand (b) und eine Draufsicht im geschlossenen Zustand (c).

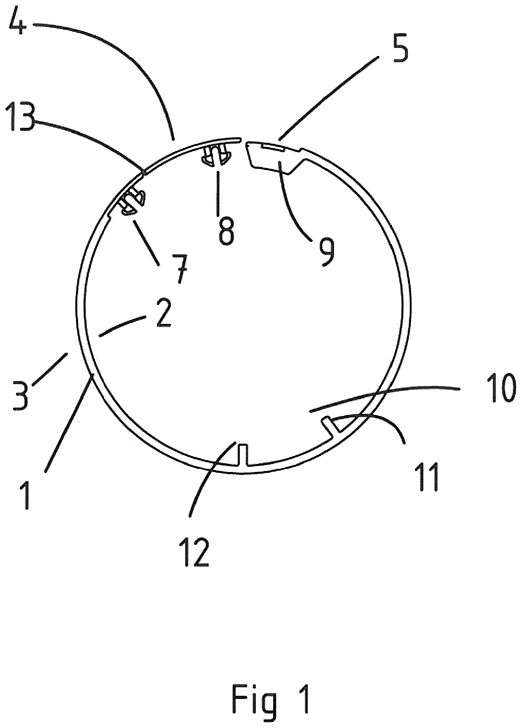

Figur 1 zeigt ein ringförmig verschließbares Band (1) zum Umfassen eines oder mehrerer Gegenstände mit einer Innenseite (2), die dazu vorgesehen ist, dem oder den zu umfassenden Gegenständen zugewandt zu sein und radial nach innen weist. Der Innenseite (2) gegenüber liegt die Außenseite (3). Das Band (1) weist zwei Endbereiche (4,5) auf, die zum Verschließen des Bandes miteinander in Überlappung gebracht werden können. Endbereich (4) weist Schließelemente (7,8) auf, die dazu ausgebildet sind, mit dem korrespondierenden Schließelement (9) von Endbereich (5) derart in Eingriff gebracht zu werden, dass das Band im geschlossenen Zustand eine im Wesentlichen glatte Außenumfangsfläche aufweist. Die Schließelemente (7,8,9) sind dazu ausgebildet, eine Relativbewegung der Endbereiche (4,5) in Umfangsrichtung und Axialrichtung zu verhindern, wenn die Schließelemente (7,8,9) miteinander in Eingriff stehen. Die Abmessungen der Schließelemente (7,8) sind auf die Abmessungen des Schließelements (9) abgestimmt, mit dem sie formschlüssig in Eingriff gebracht werden können. Die Schließelemente (7,8) sind als Rastelemente an der Innenseite (2) des Bandes (1) ausgebildet und können in Radialrichtung mit dem Schließelement (9) in Eingriff gebracht werden, so dass die Schließelemente (7,8) jeweils mit dem Schließelement (9) verrasten. Die beiden Schließelemente (7) und (8) sind in Umfangsrichtung voneinander beabstandet und können mit dem korrespondierenden Schließelement (9) in Eingriff gebracht werden, so das wahlweise zwei geschlossenen Zustände des Bandes erhalten werden können, die jeweils unterschiedliche Innenradien aufweisen. Zwischen den Schließelementen (7) und (8) ist eine Sollbruchstelle (13) vorgesehen, die es erlaubt, einen Teil des Endbereiches (4) abzubrechen, so dass für den zweiten geschlossenen Zustand mit geringerem Innenradius eine im Wesentlichen glatte Außenumfangsfläche erhalten wird.

Das Band in Fig. 1 weist einen Verdrehschutz (10) auf, der zwei an der Innenseite (2) des Bandes (1) angeordnete Vorsprünge (11, 12) umfasst, die im geschlossenen Zustand des Bandes um mehr als 90° von den Endbereichen beabstandet sind.

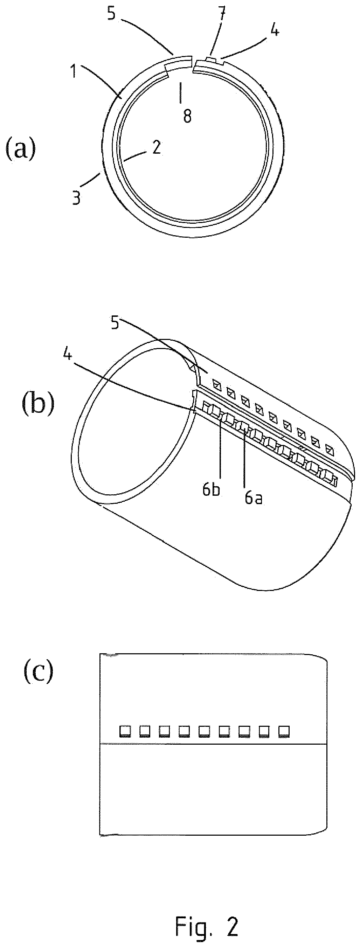

Figur 2 zeigt ein ringförmig verschließbares Band (1) zum Umfassen eines oder mehrerer Gegenstände mit einer Innenseite (2), die dazu vorgesehen ist, dem oder den zu umfassenden Gegenständen zugewandt zu sein und radial nach innen weist. Der Innenseite (2) gegenüber liegt die Außenseite (3). Das Band (1) weist zwei Endbereiche (4,5) auf, die zum Verschließen des Bandes miteinander in Überlappung gebracht werden können. Endbereich (4) weist korrespondierende Schließelemente (7,8, 9) auf, die dazu ausgebildet sind, miteinander derart in Eingriff gebracht zu werden, dass das Band im geschlossenen Zustand eine im Wesentlichen glatte Außenumfangsfläche aufweist.

Wie insbesondere in der Draufsicht auf das Band im geöffneten Zustand in Fig. 2 (b) gezeigt, umfassen die Schließelemente (7,8) jeweils eine Mehrzahl von in Axialrichtung verlaufenden Vorsprüngen (6a) und Aussparungen (6b), die so ausgebildet sind, dass die Vorsprünge eines Schließelements mit den Aussparungen des anderen Schließelements in Eingriff gebracht werden können. Die Vorsprünge und Aussparungen sind in ihren Dimensionen so aufeinander abgestimmt, dass das Band im geschlossenen Zustand eine im Wesentlichen glatte Außenumfangsfläche aufweist.

Figur 2 (c) zeigt das Band im geschlossenen Zustand. Das Band weist zwar Fugen in der Außenumfangsfläche in dem Bereich, in dem die Schließelemente ineinandergreifen, auf. Die Außenumfangsfläche ist jedoch im Wesentlichen glatt. Sie weist keine Vorsprünge, Stufen und ähnlichen Strukturelemente auf, die dazu führen können, dass das geschlossene Band an anderen Gegenständen hängenbleibt.

Das in Fig. 2 gezeigte Band ist aus einem elastischen Kunststoff gefertigt und so bemessen, dass es im geschlossenen Zustand formschlüssig eine herkömmliche Abreißkupplung eines Kraftstoffzapfventils umfassen kann.

Ein nicht zeichnerisch dargestelltes Ausführungsbeispiel der Erfindung sieht vor, dass ein aus zwei zusammenfügbaren Elementen bestehender Schutzüberzug (beispielsweise eine sich aus zwei Halbschalen zusammensetzende Kunststofftülle) für eine Komponente einer Zapfvorrichtung mittels zwei erfindungsgemäßen Bändern an der Komponente befestigt wird. Die Bänder sind dabei grundsätzlich wie in Fig. 1 gezeigt ausgebildet, wobei auf einen Verdrehschutz verzichtet wird. Bei einem alternativen Ausführungsbeispiel weisen die Bänder einen Verdrehschutz wie in Fig. 1 gezeigt auf und mindestens ein Element des Schutzüberzugs umfasst Strukturelemente, die mit dem Verdrehschutz zusammenwirken können, um ein Verdrehen der Bänder zu verhindern.

## Patentansprüche

1. Ringförmig verschließbares Band (1) zum Umfassen eines oder mehrerer Gegenstände mit
a) einer Innenseite (2), die dazu vorgesehen ist, dem oder den zu umfassenden Gegenständen zugewandt zu sein,
b) einer der Innenseite (2) gegenüberliegenden Außenseite (3) und
c) zwei Endbereichen (4,5), die zum Verschließen des Bandes miteinander in Überlappung gebracht werden können,
wobei jeder der Endbereiche (4,5) korrespondierende Schließelemente (7,8,9) aufweist, die dazu ausgebildet sind, derart miteinander in Eingriff gebracht zu werden, dass das Band (1) im geschlossenen Zustand eine im Wesentlichen glatte Außenumfangsfläche aufweist; wobei die Schließelemente (7,8,9) dazu ausgebildet sind, eine Relativbewegung der Endbereiche (4,5) in Umfangsrichtung und Axialrichtung, zu verhindern, wenn die Schließelemente (7,8,9) miteinander in Eingriff stehen, wobei
die an jedem der Endbereiche (4, 5) angeordneten Schließelemente (7,8,9) jeweils eine Mehrzahl von in Axialrichtung verlaufenden und voneinander in Axialrichtung beabstandeten Vorsprüngen (6a) und Aussparungen (6b) umfassen, die so ausgebildet sind, dass die Vorsprünge (6a) eines Schließelements mit den Aussparungen (6b) des anderen Schließelements in Eingriff gebracht werden können, **dadurch gekennzeichnet, dass** die Vorsprünge (6a) an der Außenseite eines Endbereichs (4) und an der Innenseite des anderen Endbereichs (5) angeordnet sind.

2. Band gemäß Anspruch 1, **dadurch gekennzeichnet, dass** die Abmessungen der Schließelemente (7,8,9) aufeinander abgestimmt sind.

3. Band gemäß einem der Ansprüche 1 oder 2, **dadurch gekennzeichnet, dass** die Schließelemente (7,8,9) formschlüssig miteinander in Eingriff gebracht werden können.

4. Band gemäß einem der Ansprüche 1 bis 3, **dadurch gekennzeichnet, dass** die Richtung, in der die Schließelemente (7,8,9) miteinander in Eingriff gebracht werden können, sich von der Hauptbelastungsrichtung der Endbereiche (4,5) unterscheidet.

5. Band gemäß einem der Ansprüche 1 bis 4, **dadurch gekennzeichnet, dass** die Richtung, in der die Schließelemente (7,8,9) miteinander in Eingriff gebracht werden können, sich von der Umfangsrichtung unterscheidet.

6. Band gemäß Anspruch 5, **dadurch gekennzeichnet, dass** die Schließelemente (7,8,9) in Radialrichtung miteinander in Eingriff gebracht werden können.

7. Band gemäß einem der Ansprüche 1 bis 6, **dadurch gekennzeichnet, dass** die zum Verschließen des Bandes erforderliche Kraft geringer ist, als die zum Öffnen des Bandes erforderliche Kraft.

8. Band gemäß einem der Ansprüche 1 bis 7, **dadurch gekennzeichnet, dass** zumindest eines der Schließelemente (7,8,9) wenigstens ein Rastelement umfasst, welches vorzugsweise an der Innenseite (2) des Bandes angeordnet ist.

9. Band gemäß einem der Ansprüche 1 bis 8, **dadurch gekennzeichnet, dass** die Aussparungen und Vorsprünge in ihren Dimensionen aufeinander abgestimmt sind.

10. Band gemäß einem der Ansprüche 1 bis 9, **dadurch gekennzeichnet, dass** es einen Verdrehschutz (10) aufweist, welcher vorzugsweise so angeordnet ist, dass er im geschlossenen Zustand des Bandes mindestens um 90° von den Endbereichen (4,5) beabstandet ist, wobei der Verdrehschutz (10) bevorzugt mindestens einen, vorzugsweise zwei, an der Innenseite (2) des Bandes (1) angeordnete Vorsprünge (11, 12) oder Aussparungen aufweist, die mit Strukturelementen des zu umfassenden Gegenstands zusammenwirken können, um ein Verdrehen des Bandes (1) zu verhindern.

11. Verwendung eines Bandes (1) nach einem der Ansprüche 1 bis 10 als Schutzüberzug für eine Komponente einer Zapfvorrichtung, vorzugsweise als Schutzüberzug für eine Abreißkupplung eines Zapfventils.

## Claims

1. Annularly closable band (1) for encircling one or more articles, having
a) an inner side (2), which is intended to face the article(s) to be encircled,
b) an outer side (3) located opposite the inner side (2), and
c) two end regions (4, 5) which can be made to overlap one another in order to close the band,
wherein each of the end regions (4, 5) has corresponding closing elements (7, 8, 9), which are designed to be brought into engagement with one another in such a way that the band (1) has a substantially smooth outer circumferential surface in the closed state; wherein the closing elements (7, 8, 9) are designed to prevent a relative movement of the end regions (4, 5) in the circumferential direction and axial direction when the closing elements (7, 8, 9) are in engagement with one another, wherein
the closing elements (7, 8, 9) arranged on each of the end regions (4, 5) each comprise a plurality of protrusions (6a) and cutouts (6b) which extend in the axial direction and are spaced apart from one another in the axial direction, said protrusions and cutouts being formed such that the protrusions (6a) of one closing element can be brought into engagement with the cutouts (6b) of the other closing element, **characterized in that** the protrusions (6a) are arranged on the outer side of one end region (4) and on the inner side of the other end region (5).

2. Band according to Claim 1, **characterized in that** the dimensions of the closing elements (7, 8, 9) are coordinated with one another.

3. Band according to either of Claims 1 and 2, **characterized in that** the closing elements (7, 8, 9) can be brought into engagement with one another in a form-fitting manner.

4. Band according to one of Claims 1 to 3, **characterized in that** the direction in which the closing elements (7, 8, 9) can be brought into engagement with one another differs from the main direction of loading of the end regions (4, 5).

5. Band according to one of Claims 1 to 4, **characterized in that** the direction in which the closing elements (7, 8, 9) can be brought into engagement with one another differs from the circumferential direction.

6. Band according to Claim 5, **characterized in that** the closing elements (7, 8, 9) can be brought into engagement with one another in the radial direction.

7. Band according to one of Claims 1 to 6, **characterized in that** the force required to close the band is less than the force required to open the band.

8. Band according to one of Claims 1 to 7, **characterized in that** at least one of the closing elements (7, 8, 9) comprises at least one latching element, which is arranged preferably on the inner side (2) of the band.

9. Band according to one of Claims 1 to 8, **characterized in that** the cutouts and protrusions are coordinated with one another in terms of their dimensions.

10. Band according to one of Claims 1 to 9, **characterized in that** it has an anti-twist means (10) which is preferably arranged such that, in the closed state of the band, said anti-twist means is spaced apart from the end regions (4, 5) at least by 90°, wherein the anti-twist means (10) preferably has at least one, preferably two, protrusions (11, 12) or cutouts arranged on the inner side (2) of the band (1), it being possible for said protrusions or cutouts to interact with structural elements of the article to be encircled, in order to prevent twisting of the band (1).

11. Use of a band (1) according to one of Claims 1 to 10 as a protective cover for a component of a dispensing device, preferably as a protective cover for a breakaway coupling of a dispensing nozzle.

## Revendications

1. Bande (1) pouvant être fermée en forme d'anneau pour entourer un ou plusieurs objets, comportant
a) un côté intérieur (2) qui est destiné à être tourné vers le ou les objets à entourer,
b) un côté extérieur (3) opposé au côté intérieur (2) et
c) deux régions d'extrémité (4, 5) qui peuvent être amenées en chevauchement l'une avec l'autre pour la fermeture de la bande,
chacune des régions d'extrémité (4, 5) comprenant des éléments de fermeture (7, 8, 9) correspondants qui sont réalisés pour être amenés en prise les uns avec les autres, de telle sorte que la bande (1) présente une surface périphérique extérieure sensiblement lisse à l'état fermé ;
les éléments de fermeture (7, 8, 9) étant réalisés pour empêcher un déplacement relatif des régions d'extrémité (4, 5) dans la direction périphérique et dans la direction axiale lorsque les éléments de fermeture (7, 8, 9) sont en prise les uns avec les autres,
les éléments de fermeture (7, 8, 9) disposés à chacune des régions d'extrémité (4, 5) comprenant respectivement une pluralité de saillies (6a) et d'évidements (6b) s'étendant dans la direction axiale et espacés les uns des autres dans la direction axiale, lesquels sont réalisés de telle sorte que les saillies (6a) d'un élément de fermeture peuvent être amenées en prise avec les évidements (6b) de l'autre élément de fermeture, **caractérisée en ce que** les saillies (6a) sont disposées sur le côté extérieur d'une région d'extrémité (4) et sur le côté intérieur de l'autre région d'extrémité (5).

2. Bande selon la revendication 1, **caractérisée en ce que** les dimensions des éléments de fermeture (7, 8, 9) sont adaptées les unes aux autres.

3. Bande selon l'une des revendications 1 et 2, **caractérisée en ce que** les éléments de fermeture (7, 8, 9) peuvent être amenés en prise les uns avec les autres par complémentarité de forme.

4. Bande selon l'une des revendications 1 à 3, **caractérisée en ce que** la direction dans laquelle les éléments de fermeture (7, 8, 9) peuvent être amenés en prise les uns avec les autres diffère de la direction de sollicitation principale (4, 5) des régions d'extrémité.

5. Bande selon l'une des revendications 1 à 4, **caractérisée en ce que** la direction dans laquelle les éléments de fermeture (7, 8, 9) peuvent être amenés en prise les uns avec les autres diffère de la direction périphérique.

6. Bande selon la revendication 5, **caractérisée en ce que** les éléments de fermeture (7, 8, 9) peuvent être amenés en prise les uns avec les autres dans la direction radiale.

7. Bande selon l'une des revendications 1 à 6, **caractérisée en ce que** la force nécessaire pour la fermeture de la bande est inférieure à la force nécessaire pour l'ouverture de la bande.

8. Bande selon l'une des revendications 1 à 7, **caractérisée en ce qu'**au moins l'un des éléments de fermeture (7, 8, 9) comporte au moins un élément d'encliquetage, lequel est disposé de préférence sur le côté intérieur (2) de la bande.

9. Bande selon l'une des revendications 1 à 8, **caractérisée en ce que** les évidements et saillies sont adaptés les uns aux autres en termes de dimensions.

10. Bande selon l'une des revendications 1 à 9, **caractérisée en ce qu'**elle comprend une protection antirotation (10), laquelle est de préférence disposée de telle sorte qu'elle est espacée d'au moins 90° des régions d'extrémité (4, 5) à l'état fermé de la bande, la protection antirotation (10) comprenant de préférence au moins un(e), de préférence deux saillies (11, 12) ou évidements disposé (e) s sur le côté intérieur (2) de la bande (1), lesquels peuvent coopérer avec des éléments structuraux de l'objet à entourer, afin d'empêcher une rotation de la bande (1).

11. Utilisation d'une bande (1) selon l'une des revendications 1 à 10 comme enveloppe protectrice pour un composant d'un dispositif de distribution, de préférence comme enveloppe protectrice pour un raccord cassant d'un pistolet de distribution.
